# EUROPEAN PATENT SPECIFICATION

(11) **EP 3 769 975 B1**
(45) Date of publication and mention of the grant of the patent: **30.03.2022**
(21) Application number: 20187190.2
(22) Date of filing: 22.07.2020
(51) Int. Cl.: B60C 11/00

(54) **MULTICOMPOUND TREAD FOR TYRES FOR ROAD VEHICLES**
MULTIKOMPONENTLAUFSTREIFEN FÜR REIFEN FÜR STRASSENFAHRZEUGE
BANDE DE ROUTE MULTICOMPOSANTE POUR PNEUS POUR VÉHICULES ROUTIERS

(30) Priority: 24.07.2019 IT 201900012765
(43) Date of publication of application: 27.01.2021
(73) Proprietor: Bridgestone Europe NV/SA, 1932 Zaventem (BE)
(72) Inventor: FRESCH, Enrico, 00128 Roma (IT); BARTOLONI, Alessandra, 00128 Roma (IT)
(74) Representative: Marchetti, Alessio

(56) References cited:
- EP-A1- 3 208 110
- WO-A1-2015/032601
- WO-A1-2016/173728
- DE-T5-112013 001 701
- JP-A- 2003 226 114

## Description

The invention relates to a tyre for road vehicles.

In the field of tyres for road vehicles it is known that a low rolling resistance and a good wet grip are features that can hardly be found together in the same tread. Indeed, whereas, in order to have a tyre with a good rolling resistance, it is necessary to manufacture a tread with a compound having a low hysteresis loss, in order to have a tyre with a good wet grip, it is necessary to manufacture a tread with a compound having a relatively higher hysteresis loss.

As a consequence, an ideal tread compound, in order to simultaneously exalt all dynamic responses, should have opposite hysteresis features, at least beyond certain limits of required performances.

It is known that the properties of the aforesaid rubber compound affect not only the wet grip/rolling resistance balance, but also other performances of the tyre, such as for example winter performances/wet grip.

As it is known, the tread consists of a plurality of blocks, which are elements delimited by a plurality of grooves made in the tread. These grooves can have different

dimensions depending on the function to be fulfilled. For example, when the grooves are small-sized, they are called sipes and fulfil the aim of ensuring a greater grip on snow and ice.

In other words, a block of a tread is a solid rubber portion delimited by a plurality of grooves, regardless of the dimensions of said grooves.

WO2015032601 discloses a tyre comprising a tread that comprises one central rib and two side ribs wherein the rubber compositions making up the second portion of the first side rib and the second portion of the central rib all have a value tan delta 0 that is lower than the value tan delta 0 of the rubber compositions forming the first portion of the first side rib and the first portion of the central rib.

The inventors of this invention found out that, in case the blocks of the tread consist of different portions made of respective compounds with a different hysteresis loss, a synergistic effect can be obtained, which leads to significant improvements in terms of wet grip, without for this reason negatively affecting the rolling resistance.

The subject-matter of the invention is a tread portion for tyres for road vehicles comprising a plurality of blocks; at least part of said blocks each comprising a plurality of high hysteresis loss portions, which are made of a first compound, and a plurality of low hysteresis loss portions, which are made of a second compound; said first and second compound having different dynamic properties in terms of: dynamic modulus at 30°C, tan delta at 0°C, tan delta 30°C and tan delta at 60°C; said high hysteresis loss portions and said low hysteresis loss portions having a respective contact portion, which is designed to define a portion of a global contact surface of the block in contact with the ground; said tyre being characterized in that said first compound has a dynamic modulus at 30° ranging from 11.0 to 17.0 MPa, a tan delta 2. at 0°C ranging from 0.85 to 1.1, a tan delta at 30°C ranging from 0.45 to 0.65 and a tan delta at 60°C ranging from 0.19 to 0.30; said second compound having a dynamic modulus at 30°C ranging from 5.5 to 15 MPa and smaller than the one of said first compound by at least 2 MPa, a tan delta at 0°C raning from 0.70 to 0.99 and smaller than the one of said first compound by at least 0.02, a tan delta at 30°C ranging from 0.21 to 0.63 and smaller than the one of said first compound by at least 0.02, a tan delta at 60°C ranging from 0.10 to 0.28 and smaller than the one of said first compound by at least 0.02.

The dynamic features were measured according to standard ISO 4664. As a person skilled in the art knows, the values of tanδ at 60°C are strictly correlated with rolling resistance properties: the smaller the value of tanδ at 60°C, the better the rolling resistance.

Preferably, all the blocks of the tread portion each comprises said high hysteresis loss portions and said low hysteresis loss portions.

Preferably, said high hysteresis loss portions and said low hysteresis loss portions are arranged in an alternated position relative to one another.

Preferably, each one of the contact surfaces is shaped like a strip.

Preferably, each one of the contact surfaces has a width ranging from 0.5 to 10 mm.

Preferably, said contact surfaces all have the same width.

Preferably, said high hysteresis loss portions or said low hysteresis loss portions have a contact surface with a circular shape, with a diameter ranging from 1 to 20 mm.

Preferably, the contact surfaces have a casual arrangement.

Another subject-matter of the invention is a tyre comprising an tread portion according to the invention.

The invention will now be described with reference to the accompanying drawings, wherein:
- figure 1 shows a sample manufactured to analyse one single block of the tread according to the invention;
- figure 2 is a diagram showing the results - in terms of rolling resistance and wet grip - of the different tests carried out;
- figure 3 shows eight more possible block models according to the invention.

With reference to the figure, number 1 indicates a sample manufactured to analyse the behaviour of a block of the tread according to the invention. Sample 1 comprises an alternation of linear portions 2 and 3, each made of a respective compound A and B, as shown in Table I.

Table I shows the compositions of the compounds used in the samples.

**TABLE I**

| | | FIRST COMPOUND | SECOND COMPOUND |
|---|---|---|---|
| POLYMER BASE WITH OIL | S-SBR | 100.0 | 80.0 |
| | E-SBR | 0 | 20.0 |
| FILLER | SILICA | 70.0 | 80.0 |
| | CARBON BLACK | 10.0 | 5.0 |
| BONDING AGENT | SILANE | 7.0 | 7.0 |
| | MICROCRYSTALLINE WAX | 8.0 | 8.0 |
| | STEARIC ACID | 1.0 | 1.0 |
| | AROMATIC OIL | 4.0 | 4.0 |
| Vulcanizing agents | ZINC OXIDE | 2.0 | 2.0 |
| | SULPHUR | 1.0 | 1.5 |
| | MBTS | 1.0 | 1.2 |
| | DPG | 1.5 | 1.8 |
| | DRY POLYMER BASE | 100 | 100 |

E-SBR is a polymer base obtained by means of an emulsion polymerization process with an average molecular weight ranging from 800-1500×10³ to 500-900×10³, with a styrene content ranging from 20 to 45% and used with an oil content ranging from 0 to 30%.

S-SBR is a polymer base obtained by means of a solution polymerization process with an average molecular weight ranging from 800-1500×10³ to 500-900×10³ and with a styrene content ranging from 20 to 45%.

The silica used is sold with the name ULTRASIL VN3 by DEGUSSA.

The carbon black used is sold with the name Vulcan 7H (N234) by CABOT.

The silane used is sold with the name SI 69 by DEGUSSA.

MBTS is an abbreviation for the chemical known as mercapto benzothiazole disulphide and works as vulcanization accelerator; DPG is an abbreviation for the chemical known as diphenyl guanidine and works as vulcanization accelerator.

The first and the second compound have a dynamic modulus at 30°C of 14.4 and 9.4 MPa, respectively, a tan delta at 0°C of 0.980 and 0.810, respectively, a tan delta at 30°C of 0.532 and 0.238, respectively, and a tan delta at 60°C of 0.220 and 0.124, respectively.

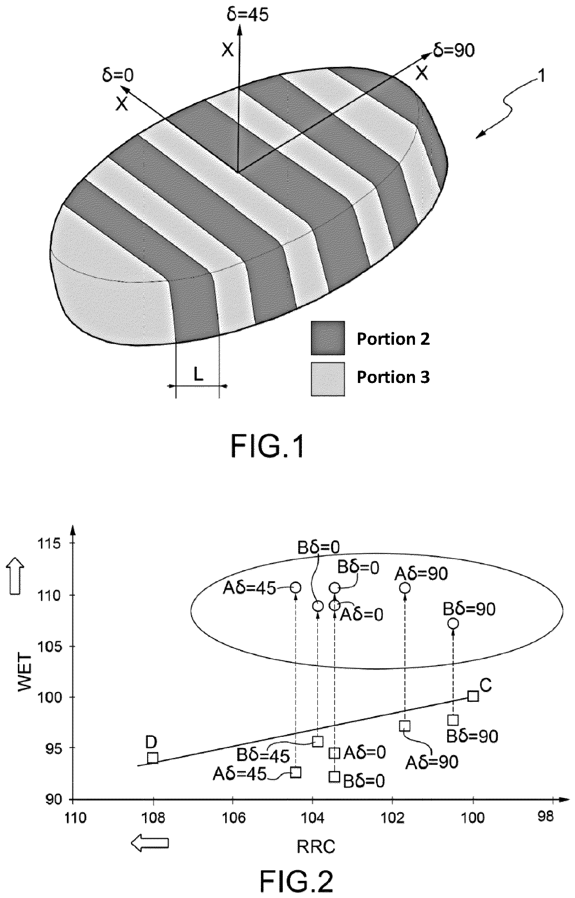

Two samples (A and B) of the type shown in figure 1 were manufactured and the difference between them lies in the width L of the linear portions. In sample A the portions 2 and 3 have a width equal to 1 mm, whereas in sample B the portions 2 and 3 have a width equal to 2 mm.

The two aforesaid samples were subjected to tests in compliance with standard ISO 4664, so as to assess their dynamic properties. In particular, the performances in terms of rolling resistance were correlated with the values of Tanδ at 60°C.

The wet grip performances were assessed by comparing the friction coefficient of the compounds, which is obtained with a linear friction measuring device at the speed of 500 mm/s, at the temperature of 5°C under wet conditions. The results were obtained by comparing the respective friction coefficients: the greater the index, the greater the friction coefficient and, hence, the wet grip.

In order to complete the analysis, taking into account the particular composition of the two samples A and B (alternation of linear portions), the tests were repeated at a different angle ϑ defined (as shown in figure 1) between the direction of movement of the sample X and the extension of the portions 2 and 3. In particular, the tests were carried out with an angle ϑ of 0°, 45° and 90°.

In order to have a comparison, the same tests were also carried out on two comparison samples (C and D), each manufactured with the sole compound of the portion 2 (C) and with the sole compound of the portion 3 (D), respectively.

The diagram of figure 2 clearly shows how the two samples (A and B) of the block of the tread according to the invention have wet grip properties that are remarkably better than the ones of the comparison samples (C and D).

In order to better show the effects achieved in terms of wet grip and rolling resistance, the values were indexed to the values obtained with sample C.

In particular, the diagram of figure 2 shows both the values theoretically calculated based on the combination of the two compounds and the values actually detected (comprised in a closed curve). In the diagram of figure 2, the difference between the calculated values and the actually detected values is highlighted with a broken arrow joining them.

A comparison between the calculated values and the actually detected values clearly points out how the use of the block comprising different portions made of respective compounds with different dynamic properties produces a synergistic effect in terms of wet grip, whereas the expected advantages in terms of rolling resistance are maintained and, hence, not worsened.

In other words, the solution involving the use of tread blocks comprising different portions made of respective compounds with different dynamic properties ensures important improving effects in terms of wet grip, though without jeopardizing, at the same time, the advantages obtained in terms of rolling resistance.

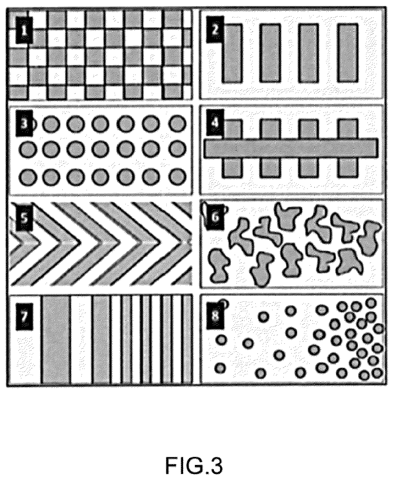

Figure 3 shows eight more possible block solutions. The models of figure 3 indicate how different compounds (light grey and dark grey) can physically be located in a tread block in order to obtain different geometries on the surface. By way of example of a synergy concept, the model indicated with number 3 could be examined to manufacture a sort of "multi-pin tread" in winter/all season applications. In model 3, a stiffer compound (dark grey dots) is embedded in a softer compound (light grey), acting like spikes when driving on roads with ice or snow.

## Claims

1. A tread portion for tyres for road vehicles comprising a plurality of blocks; at least part of said blocks each comprising a plurality of high hysteresis loss portions (2), which are made of a first compound, and a plurality of low hysteresis loss portions (3), which are made of a second compound; said first and second compounds having different dynamic properties in terms of: dynamic modulus at 30°C, tan delta at 0°C, tan delta at 30°C and tan delta at 60°C, said dynamic properties measured according to standard ISO 4664; said high hysteresis loss portions (2) and said low hysteresis loss portions (3) having a respective contact portion, which is designed to define a portion of a global contact surface of the block in contact with the ground; said tread portion **being characterized in that** said first compound has a dynamic modulus at 30° ranging from 11.0 to 17.0 MPa, a tan delta at 0°C ranging from 0.85 to 1.1, a tan delta at 30°C ranging from 0.45 to 0.65 and a tan delta at 60°C ranging from 0.19 to 0.30; said second compound having a dynamic modulus at 30°C ranging from 5.5 to 15 MPa and smaller than the one of said first compound by at least 2 MPa, a tan delta at 0°C raning from 0.70 to 0.99 and smaller than the one of said first compound by at least 0.02, a tan delta at 30°C ranging from 0.21 to 0.63 and smaller than the one of said first compound by at least 0.02, a tan delta at 60°C ranging from 0.10 to 0.28 and smaller than the one of said first compound by at least 0.02.

2. A tread portion according to claim 1, **characterized in that** all blocks of said plurality of blocks each comprises said high hysteresis loss portions (2) and said low hysteresis loss portions (3).

3. A tread portion according to claim 1 or 2, **characterized in that** said high hysteresis loss portions (2) and said low hysteresis loss portions (3) are arranged in an alternated position relative to one another.

4. A tread portion according to one of the preceding claims, **characterized in that** each one of the contact surfaces is shaped like a strip.

5. A tread portion according to claim 4, **characterized in that** each one of the contact surfaces has a width ranging from 0.5 to 10 mm.

6. A tread portion according to claim 5, **characterized in that** said contact surfaces all have the same width.

7. A tread portion according to claim 1 or 2, **characterized in that** said high hysteresis loss portions or said low hysteresis loss portions have a contact surface with a circular shape.

8. A tread portion according to claim 7, **characterized in that** each one of the contact surfaces with a circular shape have a diameter ranging from 1 to 20 mm.

9. A tread portion according to claim 1 or 2, **characterized in that** said contact surfaces have a casual arrangement.

10. A tyre comprising a tread portion according to one of the preceding claims.

## Patentansprüche

1. Laufflächenabschnitt für Reifen für Straßenfahrzeuge, der eine Vielzahl von Blöcken umfasst; wobei mindestens ein Teil der Blöcke jeweils eine Vielzahl von Abschnitten mit hohen Hystereseverlusten (2) umfassen, die aus einer ersten Mischung hergestellt sind, und eine Vielzahl von Abschnitten mit geringen Hystereseverlusten (3), die aus einer zweiten Mischung hergestellt sind; wobei die erste und die zweite Mischung unterschiedliche dynamische Eigenschaften aufweisen in Bezug auf: dynamischen Modul bei 30 °C, tan delta bei 0 °C, tan delta bei 30 °C und tan delta bei 60 °C, wobei die dynamischen Eigenschaften gemäß der Norm ISO 4664 gemessen werden; wobei die Abschnitte mit hohen Hystereseverlusten (2) und die Abschnitte mit geringen Hystereseverlusten (3) einen jeweiligen Kontaktabschnitt aufweisen, der dazu ausgelegt ist, einen Abschnitt einer globalen Kontaktfläche des Blocks in Kontakt mit dem Boden zu definieren; wobei der Laufflächenabschnitt **dadurch gekennzeichnet ist, dass** die erste Mischung einen dynamischen Modul bei 30° im Bereich von 11,0 bis 17,0 MPa, ein tan delta bei 0 °C im Bereich von 0,85 bis 1,1, ein tan delta bei 30 °C im Bereich von 0,45 bis 0,65 und ein tan delta bei 60 °C im Bereich von 0,19 bis 0,30 aufweist; wobei die zweite Mischung einen dynamischen Modul bei 30 °C im Bereich von 5,5 bis 15 MPa und um mindestens 2 MPa kleiner als den der ersten Mischung, ein tan delta bei 0 °C im Bereich von 0,70 bis 0,99 und um mindestens 0,02 kleiner als das der ersten Mischung, ein tan delta bei 30 °C im Bereich von 0,21 bis 0,63 und um mindestens 0,02 kleiner als das der ersten Mischung, ein tan delta bei 60 °C im Bereich von 0,10 bis 0,28 und um mindestens 0,02 kleiner als das der ersten Mischung, aufweist.

2. Laufflächenabschnitt nach Anspruch 1, **dadurch gekennzeichnet, dass** alle Blöcke der Vielzahl von Blöcken jeweils die Abschnitte mit hohen Hystereseverlusten (2) und die Abschnitte mit geringen Hystereseverlusten (3) umfassen.

3. Laufflächenabschnitt nach Anspruch 1 oder 2, **dadurch gekennzeichnet, dass** die Abschnitte mit hohen Hystereseverlusten (2) und die Abschnitte mit geringen Hystereseverlusten (3) in einer abwechselnden Position relativ zueinander angeordnet sind.

4. Laufflächenabschnitt nach einem der vorstehenden Ansprüche, **dadurch gekennzeichnet, dass** jede der Kontaktflächen wie ein Streifen geformt ist.

5. Laufflächenabschnitt nach Anspruch 4, **dadurch gekennzeichnet, dass** jede der Kontaktflächen eine Breite im Bereich von 0,5 bis 10 mm aufweist.

6. Laufflächenabschnitt nach Anspruch 5, **dadurch gekennzeichnet, dass** die Kontaktflächen alle die gleiche Breite aufweisen.

7. Laufflächenabschnitt nach Anspruch 1 oder 2, **dadurch gekennzeichnet, dass** die Abschnitte mit hohen Hystereseverlusten oder die Abschnitte mit geringen Hystereseverlusten eine Kontaktfläche mit einer kreisförmigen Form aufweisen.

8. Laufflächenabschnitt nach Anspruch 7, **dadurch gekennzeichnet, dass** jede der Kontaktflächen mit einer kreisförmigen Form einen Durchmesser im Bereich von 1 bis 20 mm aufweist.

9. Laufflächenabschnitt nach Anspruch 1 oder 2, **dadurch gekennzeichnet, dass** die Kontaktflächen eine zufällige Anordnung aufweisen.

10. Reifen, umfassend eine Lauffläche nach einem der vorstehenden Ansprüche.

## Revendications

1. Partie de bande de roulement pour des pneus pour véhicules routiers comprenant une pluralité de blocs ; au moins une partie desdits blocs comprenant chacun une pluralité de parties à forte perte par hystérésis (2), qui sont constituées d'un premier composé, et une pluralité de parties à faible perte par hystérésis (3), qui sont constituées d'un deuxième composé ; lesdits premier et deuxième composés ayant des propriétés dynamiques différentes en termes de : module dynamique à 30 °C, tan delta à 0 °C, tan delta à 30 °C et tan delta à 60 °C , lesdites propriétés dynamiques mesurées selon la norme ISO 4664 ; lesdites parties à forte perte par hystérésis (2) et lesdites parties à faible perte par hystérésis (3) ayant une partie de contact respective, qui est destinée à définir une partie d'une surface de contact globale du bloc en contact avec le sol ; ladite partie de bande de roulement étant **caractérisée en ce que** ledit premier composé a un module dynamique à 30 ° allant de 11,0 à 17,0 MPa, une tan delta à 0 °C allant de 0,85 à 1,1, une tan delta à 30 °C allant de 0,45 à 0,65 et une tan delta à 60 °C allant de 0,19 à 0,30 ; ledit deuxième composé ayant un module dynamique à 30 °C allant de 5,5 à 15 MPa et plus petit que celui dudit premier composé d'au moins 2 MPa, une tan delta à 0 °C allant de 0,70 à 0,99 et plus petite que celle dudit premier composé d'au moins 0,02, une tan delta à 30 °C allant de 0,21 à 0,63 et plus petite que celle dudit premier composé d'au moins 0,02, une tan delta à 60 °C allant de 0,10 à 0,28 et plus petite que celle dudit premier composé d'au moins 0,02.

2. Partie de bande de roulement selon la revendication 1, **caractérisée en ce que** tous les blocs de ladite pluralité de blocs comprennent chacun lesdites parties à forte perte par hystérésis (2) et lesdites parties à faible perte par hystérésis (3).

3. Partie de bande de roulement selon la revendication 1 ou 2, **caractérisée en ce que** lesdites parties à forte perte par hystérésis (2) et lesdites parties à faible perte par hystérésis (3) sont agencées dans une position alternée les unes par rapport aux autres.

4. Partie de bande de roulement selon l'une des revendications précédentes, **caractérisée en ce que** chacune des surfaces de contact est profilée comme une bande.

5. Partie de bande de roulement selon la revendication 4, **caractérisée en ce que** chacune des surfaces de contact a une largeur allant de 0,5 à 10 mm.

6. Partie de bande de roulement selon la revendication 5, **caractérisée en ce que** lesdites surfaces de contact ont toutes la même largeur.

7. Partie de bande de roulement selon la revendication 1 ou 2, **caractérisée en ce que** lesdites parties à forte perte par hystérésis ou lesdites parties à faible perte par hystérésis ont une surface de contact avec une forme circulaire.

8. Partie de bande de roulement selon la revendication 7, **caractérisée en ce que** chacune des surfaces de contact avec une forme circulaire a un diamètre allant de 1 à 20 mm.

9. Partie de bande de roulement selon la revendication 1 ou 2, **caractérisée en ce que** lesdites surfaces de contact ont un agencement ordinaire.

10. Pneu comprenant une partie de bande de roulement selon l'une des revendications précédentes.
